# EUROPÄISCHE PATENTANMELDUNG

(11) **EP 2 308 700 A1**
(43) Veröffentlichungstag der Anmeldung: **13.04.2011**
(21) Anmeldenummer: 10008613.1
(22) Anmeldetag: 18.08.2010
(51) Int. Cl.: B60D 5/00, B61D 17/20

(54) **Mindestens zwei Fahrzeugteile umfassendes Fahrzeug**

(30) Priorität: 08.10.2009 DE 202009013611 U
(71) Anmelder: Hübner GmbH, D-34123 Kassel (DE)
(72) Erfinder: Scharf, Lothar, 37242 Bad Sooden-Allendorf (DE); Gumpert, Horst, 38226 Salzgitter 1 (DE)
(74) Vertreter: Walther, Walther & Hinz GbR

(57) **Zusammenfassung**

Gegenstand der vorliegenden Erfindung ist ein mindestens zwei Fahrzeugteile (1, 2) umfassendes Fahrzeug, wobei die mindestens zwei Fahrzeugteile (1, 2) durch ein Gelenk (10) miteinander verbunden sind, wobei das Gelenk (10) nach Art eines in sich beweglichen Vierecks mit vier Gelenkstangen (11, 12, 13, 14) ausgebildet ist, wobei während der Fahrt in Abhängigkeit vom Knickwinkel die Lage mindestens zweier unmittelbar miteinander verbundener Gelenkstangen (11, 12, 13, 14) festlegbar ist.

## Beschreibung

Die vorliegende Erfindung betrifft ein mindestens zwei Fahrzeugteile umfassendes Fahrzeug, wobei die mindestens zwei Fahrzeugteile durch ein Gelenk miteinander verbunden sind.

Durch ein Gelenk verbundene Fahrzeuge sind sowohl aus dem Schienenverkehr als auch aus dem Straßenverkehr bekannt. Insbesondere im Straßenverkehr sind in diesem Zusammenhang Gelenkbusse bekannt, bei denen das hintere Fahrzeugteil lediglich eine Achse aufweist, und sich infolgedessen durch das Gelenk an dem vorderen Fahrzeugteil abstützt. Daneben sind auch doppelachsige Hinterwagen bekannt, und zwar insbesondere dann, wenn es sich um sogenannte Anhänger handelt, die an dem Zugfahrzeug, beispielsweise durch eine Deichselverbindung, gekoppelt sind.

Gelenke zur Verbindung zweier Fahrzeugteile sind aus dem Stand der Technik in den unterschiedlichsten Ausführungen bekannt. Bekannt ist in diesem Zusammenhang die Anordnung eines zentralen Gelenks in Form eines Knickgelenks, mit einer in der Mittellängsachse des Fahrzeugs angeordneten zentralen Achse, wobei das Fahrzeug bei Kurvenfahrt um diese Achse einknickt. Nachteilig bei den bekannten Knickgelenken ist, dass aufgrund der Erstreckung des Gelenkes zwischen den beiden Fahrzeugen oder Fahrzeugteilen ein Abstand von etwa 1600 mm erforderlich ist. Dieser Raum ist nur eingeschränkt nutzbar, insbesondere können in diesem Bereich keine Bänke für Fahrgäste angeordnet werden.

Aus der EP 1 342 594 B1 ist insofern ein sogenanntes Kreuzgelenk bekannt, das den Bauraum zwischen zwei Fahrzeugteilen, die durch ein solches Kreuzgelenk gelenkig miteinander verbunden sind, erheblich reduziert, und zwar auf etwa 1000 mm. Dies ermöglicht die Anordnung mindestens einer weiteren Sitzreihe in dem einen Fahrzeugteil.

Zu den an Gelenkbusse gestellten Anforderungen zählt, dass diese den sogenannten Einheitskreis durchfahren können müssen. Der Knickwinkel zwischen den beiden Fahrzeugteilen zum Durchfahren eines solchen Einheitskreises beträgt maximal 54°.

In der Vergangenheit hat sich allerdings herausgestellt, dass solche Knickwinkel nicht immer ausreichend sind. Dies gilt insbesondere dann, wenn der Einsatz solcher Gelenkfahrzeuge nicht im Personennahverkehr vorgesehen ist, sondern z. B. im Güterverkehr. Das heißt, die Erfindung bezieht sich insofern auch auf Gelenkfahrzeuge, umfassend ein Zugfahrzeug und einen Hänger, die im Gütertransport eingesetzt werden, wobei hier Knickwinkel von wesentlich über 54° erreicht werden. Auch im Gütertransport ist man naturgemäß bestrebt, den Zwischenraum zwischen den beiden gelenkig miteinander verbundenen Fahrzeugen zu reduzieren, sodass sich grundsätzlich auch der Einsatz eines Kreuzgelenkes anbietet. Allerdings hat sich herausgestellt, dass unter Einsatz eines solchen Kreuzgelenkes keine Knickwinkel von mehr als 54° verwirklicht werden können. In keinem Fall sind Knickwinkel von nahezu 90° bei konstanter Länge der das Kreuzgelenk bildenden Gelenkstangen zu verwirklichen.

Die der Erfindung zugrunde liegende Aufgabe besteht demzufolge darin, für ein mindestens zwei Fahrzeugteile umfassendes Fahrzeug ein Gelenk bereitzustellen, das die Möglichkeit eröffnet, Knickwinkel von nahezu 90° zu verwirklichen und zusätzlich den Bauraum zwischen den beiden Fahrzeugteilen gering zu halten.

Die Aufgabe wird erfindungsgemäß durch ein Gelenk gelöst, wobei das Gelenk nach Art eines in sich beweglichen Vierecks mit vier Gelenkstangen ausgebildet ist, wobei während der Fahrt in Abhängigkeit von dem Knickwinkel die Lage mindestens zweier unmittelbar miteinander verbundener Gelenkstangen festlegbar ist. Bei Einsatz eines solchen Gelenkvierecks als Gelenk zwischen zwei Fahrzeugteilen wird die Möglichkeit eröffnet, das Gelenk in Abhängigkeit vom Knickwinkel quasi zu verlängern. Dies insofern, als die Möglichkeit besteht, ausgehend von einer rautenförmigen Grundform bei Geradeausfahrt der Fahrzeuge in eine Quadratform des Gelenks überzugehen, wenn die beiden Fahrzeugteile im Winkel von 90° zueinander stehen. Das heißt, der Abstand in der Mittellängsachse der beiden Fahrzeugteile zwischen den Fahrzeugteilen bleibt bis zu einem Winkel von etwa 40° gleich, allerdings wird sich der Abstand dann, wenn der Knickwinkel über 40° beträgt, zwischen den beiden Fahrzeugteilen im Bereich der Mittellängsachse kontinuierlich vergrößern, bis - wie bereits ausgeführt - bei einer Winkelstellung von 90° der Fahrzeugteile relativ zueinander das Gelenk selbst eine quadratische Grundform eingenommen hat.

Vorteilhafte Merkmale und Ausgestaltungen zu der Erfindung ergeben sich aus den Unteransprüchen.

So ist insbesondere vorgesehen, dass das Gelenk vier gleich lange Gelenkstangen aufweist, die alle gelenkig miteinander verbunden sind, um so - wie bereits an anderer Stelle ausgeführt - auch Knickwinkel von weit über 40° bis an 90° heran bereitzustellen, um auch enge Kurven durchfahren zu können. Im Einzelnen ist in diesem Zusammenhang vorgesehen, dass die Gelenkstangen um jeweils eine im Einbauzustand vertikale Achse miteinander verschwenkbar verbunden sind.

Die Verbindung zwischen Gelenk und Fahrzeug erfolgt im Bereich der gelenkigen Verbindung zweier Gelenkstangen, wobei in Bezug auf die Verbindung zwischen dem Gelenk und dem Fahrzeug auf einer Seite zumindest ein Knick-, Nick- und Wanklager vorgesehen ist, wobei auf der gegenüberliegenden Seite, z. B. an der Anlenkung des Gelenks am Hinterwagen, zumindest ein Nick- und ein Knickgelenk vorgesehen ist.

Es wurde bereits an anderer Stelle dargelegt, dass in Abhängigkeit vom Knickwinkel die Lage mindestens zweier unmittelbar miteinander verbundener Gelenkstangen festlegbar ist. In diesem Zusammenhang ist vorgesehen, dass mindestens zwischen zwei unmittelbar verbundenen Gelenkstangen mindestens eine ansteuerbare Kolbenzylindereinheit angeordnet ist. Es wurde ebenfalls bereits an anderer Stelle dargelegt, dass bis zu einem Knickwinkel von 40° das Gelenk seine Form im Wesentlichen beibehält, d. h., von der vorgegebenen Rautenform zunächst nicht abweicht. Bei Knickwinkeln über 40°, insbesondere einem Knickwinkel von 90° - so wurde bereits erläutert - sich das Gelenk jedoch zu einer quadratischen Grundform verformt. In der Ausgangslage, d. h. bei Geradeausfahrt der Fahrzeuge, wird insofern durch die Kolbenzylindereinheit sichergestellt, dass das Gelenk die Ausgangsposition beibehält. Erst bei Knickwinkeln über 40° erfolgt durch Ansteuerung der Kolbenzylindereinheit ein Auseinanderziehen des Gelenks insofern, als in der Endstellung, d. h. in einer Stellung, bei der die beiden Fahrzeugteile in einem Winkel von etwa 90° zueinander stehen, das Gelenk selbst in der Draufsicht als Quadrat ausgebildet ist. Verlassen nunmehr die Fahrzeuge den Knickwinkel von 90°, dann muss dafür gesorgt werden, dass das Gelenk kontinuierlich in seine Ausgangslage zurückgeführt wird, d. h. bei Geradeausfahrt die ursprüngliche Rautenform wieder einnimmt. Durch Ansteuerung des oder der Kolbenzylindereinheiten, die zwischen zwei ein Gelenkstangenpaar bildenden Gelenkstangen angeordnet sind, wird das Gelenk quasi zusammengezogen, mit der Folge, dass es die bereits zuvor erwähnte Rautenstellung wieder einnimmt.

Wie bereits an anderer Stelle erläutert, ist das Gelenk auch einsetzbar bei einem Hinterwagen, der nicht als Einachser oder Tandemachser ausgebildet ist, sondern über zwei beabstandet zueinander angeordnete Achsen verfügt. Um nun zu gewährleisten, dass bei Kurvenfahrt auch der Hinterwagen in einer Hüllkurve zu dem Vorderwagen verbleibt, und nicht bei Kurvenfahrt seitlich über die Hüllkurve des Vorderwagens vorsteht, ist insbesondere vorgesehen, dass die vordere Achse des Hinterwagens eine Achsschenkellenkung aufweist. Der Einsatz einer Drehschemellenkung würde eine solche Kurvenfahrt mit einem solchen Gelenk bei einem zweiachsigen Anhänger, der nicht als Tandemachser ausgebildet ist, nicht ermöglichen, da bei einer solchen Drehschemellenkung davon auszugehen ist, dass der Hänger nicht dem Zugfahrzeug unter Beibehaltung eines Radius folgen kann, mithin ein Balg oder eine Durchgangsplattform nicht vorgesehen werden kann.

Ein weiterer Vorteil zwischen zwei durch das erfindungsgemäße Gelenk miteinander verbundenen Fahrzeugteilen, wobei das hintere Fahrzeugteil als Doppelachsanhänger ausgebildet ist, besteht gegenüber dem Kreuzgelenk darin, dass sich im Einbauzustand Höhenabstand zwischen den beiden sich kreuzenden Stangen eines solchen Kreuzgelenkes kontinuierlich verändert, wenn das Fahrzeug über Kuppen oder durch Senken fährt. Bei der Verwendung eines Rautengelenks, wie es Gegenstand der vorliegenden Erfindung ist, findet bei Kurvenfahrt eine Höhenveränderung der Stangen relativ zueinander hingegen nicht statt. Das bedeutet, dass eine Plattform unmittelbar auf den Gelenkstangen gelagert werden kann. Wesentlich ist darüber hinaus, wie dies ebenfalls bereits an anderer Stelle angedeutet wurde, dass im Gegensatz zu einem Kreuzgelenk die auf die Stangen einwirkenden Kräfte bei einem sogenannten Rautengelenk durchaus geringer sind, als bei einem Kreuzgelenk, wenn nämlich der Knickwinkel zwischen den beiden Fahrzeugen mehr als 40° beträgt. Dies ganz abgesehen davon, dass mit einem Kreuzgelenk Winkel von im Wesentlichen über 40°, insbesondere in dem Bereich von 90°, nicht zu verwirklichen sind.

Nach einem weiteren Merkmal der Erfindung ist vorgesehen, dass zumindest eine der beiden zu dem einen Fahrzeugteil unmittelbar benachbart befindliche Gelenkstangen, vorzugsweise jedoch alle Gelenkstangen, durch eine ansteuerbare Kolbenzylindereinheit mit dem jeweils unmittelbar benachbarten Fahrzeug verbunden ist. Eine solche Anordnung von Kolbenzylindereinheiten zwischen der Stirnseite des Fahrzeugteils und den entsprechenden Gelenkstangen des Gelenks ist vorgesehen, um die Stellung des Gelenks aktiv zu beeinflussen, wobei die Steuerung in Bezug auf die zuvor genannten Kolbenzylindereinheiten zwischen den Stirnseiten der Fahrzeugteile und den entsprechenden Gelenkstangen des Gelenks in Übereinstimmung mit der oder den Kolbenzylindereinheiten zwischen zwei unmittelbar benachbarten Gelenkstangen stattfindet. Das heißt, durch die Kolbenzylindereinheiten wird das Gelenk in seiner Länge relativ zu den Stirnseiten der Fahrzeuge stabilisiert, z. B. bei Geradeausfahrt. Darüber hinaus findet durch diese Kolbenzylindereinheiten zwischen Stirnwand und Gelenkstangen auch eine kontrollierte Schwenkbewegung in Abhängigkeit von der Stellung, d. h. der momentanen Länge der mindestens einen Kolbenzylindereinheit zwischen den Gelenkstangen statt, wenn die Fahrzeugteile eine Kurve durchfahren, insbesondere bei Knickwinkeln von über 40°.

Nach einem weiteren Merkmal der Erfindung ist vorgesehen, dass die einzelnen Gelenkstangen durch Knicklager miteinander in Verbindung stehen, wobei auf diese Weise sichergestellt ist, dass das Gelenk in einer Ebene verbleibt, sodass eine Plattform das Gelenk überspannen kann. An dieser Stelle sei darauf hingewiesen, dass die eigentlichen Nick-, Wank-und Knicklager im Bereich der Anbindung des Gelenks an den Vorderwagen bzw. Hinterwagen angeordnet sind.

Anhand der Zeichnungen wird die Erfindung nachstehend beispielhaft näher erläutert.
- Figur 1: zeigt schematisch die Verbindung zweier Fahrzeugteile durch das erfindungsgemäße Rautengelenk, wobei die Fahrzeugteile fluchtend zueinander stehen;
- Figur 2: zeigt eine Darstellung gemäß Figur 1, wobei jedoch der Knickwinkel zwischen den beiden Fahrzeugteilen etwa bei 40° liegt;
- Figur 3: zeigt eine Darstellung gemäß Figur 1, bei der der Knickwinkel zwischen den beiden Fahrzeugen etwa 90° beträgt;
- Figur 4: zeigt schematisch die Anordnung des Gelenkes an einer Stirnseite eines Fahrzeugteils;
- Figur 4a: zeigt einen Schnitt gemäß der Linie IV - IV aus Figur 4;
- Figur 5: zeigt schematisch die Ausbildung eines Gelenks zwischen zwei Gelenkstangen.

Die beiden Fahrzeugteile 1 und 2 sind durch das insgesamt mit 10 bezeichnete Gelenk miteinander verbunden. Das Gelenk 10 umfasst die vier Gelenkstangen 11 bis 14, die jeweils durch Knick- oder Drehgelenke 15 miteinander in Verbindung stehen. Die Knickgelenke 15 lassen eine Schwenkbewegung der Gelenkstangen nur in einer horizontalen Ebene zu, sodass eine Plattform das Gelenk überspannen kann. Ein solches Knickgelenk umfasst zwei Lagerschalen 15a, 15b, die durch den Bolzen 15d verbunden sind und der mit den Gelenkstangen 11, 12, 13 und 14 in Verbindung steht.

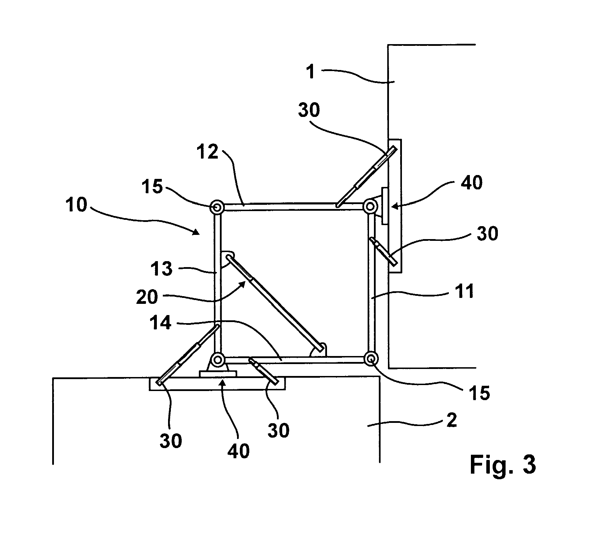

Zwischen den beiden Gelenkstangen 13 und 14 befindet sich die Kolbenzylindereinheit 20. Die Kolbenzylindereinheit ist ansteuerbar und sorgt dafür, dass die Stangen 13, 14 in Abhängigkeit von dem Knickwinkel eine bestimmte Lage bzw. Winkelstellung relativ zueinander einnehmen, wie sich dies insbesondere in Anschauung von Figur 3 ergibt. Von der Erfindung umfasst ist auch eine Ausführungsform mit zusätzlicher Kolbenzylindereinheit zwischen den Gelenkstangen 11 und 12.

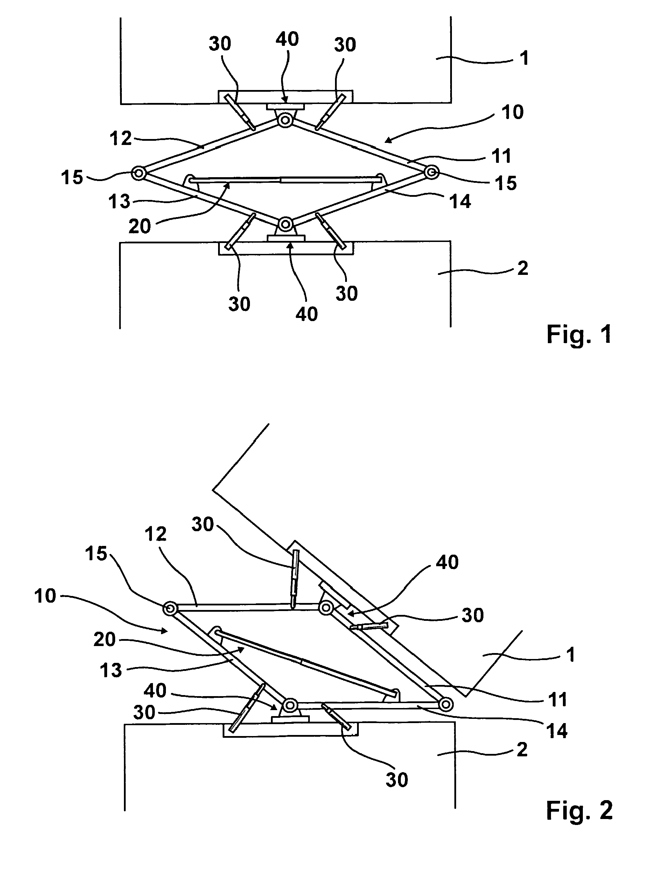

Bei der Darstellung gemäß Figur 2, bei der die beiden Fahrzeuge einen Knickwinkel von etwa 40° zueinander aufweisen, ist die Kolbenzylindereinheit 20 noch gesperrt. Erst bei Vergrößerung des Knickwinkels über 40° hinaus, beispielsweise in einen Bereich von 90° hinein, wie in Figur 3 dargestellt, wird die Kolbenzylindereinheit 20 entsperrt auf die entsprechende Länge zusammengefahren mit der Folge, dass das Gelenk eine Stellung gemäß Figur 3 einnimmt, bei der die einzelnen Gelenkstangen 11 bis 14 im rechten Winkel zueinander stehen.

Ein definierter Bewegungsablauf im Bereich der Knickwinkel von 0° bis 90° wird bewerkstelligt durch die Anordnung von Kolbenzylindereinheiten 30 zwischen der Stirnseite des jeweiligen Fahrzeugs und der entsprechenden Gelenkstange 11 bis 14, wie sich dies insbesondere in Anschauung von Figur 3 in Vergleich zu Figur 1 oder auch Figur 2 darstellt. Zumindest ist zu jeder Stirnseite der Fahrzeuge eine mit einer Gelenkstange 11-14 verbundene Kolbenzylindereinheit vorgesehen. Das heißt, durch die Auslenkung der Kolbenzylindereinheiten 30 wird eine kontinuierliche Verschwenkung des Gelenks, umfassend die vier Gelenkstangen 11 bis 14, wie in der Darstellung gemäß der Figur 3, ermöglicht. Das heißt, die Aufgabe der Kolbenzylindereinheiten 30 besteht in Verbindung mit der Kolbenzylindereinheit 20 darin, zum einen die Verstellung des Gelenks, d. h. seine Stellung relativ zu dem Vorder- bzw. Hinterwagen zu steuern, und zum anderen die Verlängerung des Gelenks bei einem gewünschten Knickwinkel von 90° - wie in Figur 3 dargestellt - zu bewirken. Die Kolbenzylindereinheiten 30 sind in jedem Fall zu beiden Seiten der Kupplung zwischen dem Gelenk einerseits und dem Vorder- bzw. Hinterwagen andererseits angeordnet.

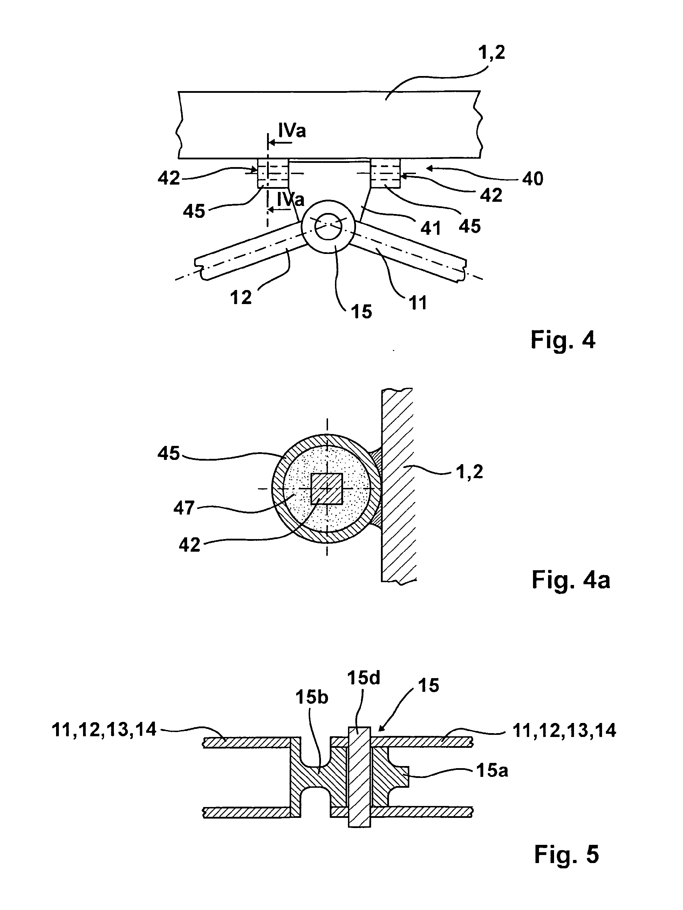

Die Gelenkverbindung 40 zum jeweiligen Fahrzeugteil 1, 2 ergibt sich schematisch aus der Darstellung gemäß Figur 4. Die Knickbewegung wird durch die Verbindung der Gelenkstangen 11, 12 durch das Knickgelenk 15 bereitgestellt. Wank- und Nickbewegungen werden durch die Gelenkverbindung 40 bewerkstelligt. Hierzu sind an dem Gelenkträger 41 zwei Achsstummel 42 angeordnet, die in einer an dem einen Fahrzeugteil angeordneten Gelenkhülse 45 mit einer Gummihülse 47 eingespannt gelagert sind (Figur 4a). Dadurch, dass die Achsstummel vorzugsweise im Querschnitt eine Rechteck- oder Quadratform aufweisen, und diese Achsstummel - wie bereits ausgeführt - in einer Gummihülse 47 lagern (Figur 4a), die wiederum mit der Gelenkhülse 45 aus Metall in Verbindung steht, ist ein solches Gelenk 40 in der Lage, sowohl Schwenkbewegungen um die Achsstummel 42 zur Zulassung von Nickbewegungen der Fahrzeugteile relativ zueinander zu ermöglichen, als auch Wankbewegungen aufzunehmen, wie sie auftreten, wenn die beiden Fahrzeugteile relativ zueinander um die Mittellängsachse verdreht werden. Welcher Grad an Wankbewegungen hier zugelassen wird, hängt von der Ausgestaltung des von dem in Figur 4a dargestellten Lagers ab.

## Patentansprüche

1. Ein mindestens zwei Fahrzeugteile (1, 2) umfassendes Fahrzeug, wobei die mindestens zwei Fahrzeugteile (1, 2) durch ein Gelenk (10) miteinander verbunden sind, wobei das Gelenk (10) nach Art eines in sich beweglichen Vierecks mit vier Gelenkstangen (11, 12, 13, 14) ausgebildet ist, wobei während der Fahrt in Abhängigkeit vom Knickwinkel die Lage mindestens zweier unmittelbar miteinander verbundener Gelenkstangen (11, 12, 13, 14) festlegbar ist.

2. Ein mindestens zwei Fahrzeugteile (1, 2) umfassendes Fahrzeug nach Anspruch 1,
**dadurch gekennzeichnet,**
**dass** das Gelenk (10) vier gleich lange Gelenkstangen (11, 12, 13, 14) aufweist, die alle gelenkig miteinander in Verbindung stehen.

3. Ein mindestens zwei Fahrzeugteile (1, 2) umfassendes Fahrzeug nach einem der voranstehenden Ansprüche,
**dadurch gekennzeichnet,**
**dass** die Gelenkstangen (11, 12, 13, 14) durch jeweils um eine im Einbauzustand vertikale Achse miteinander verschwenkbar verbunden sind.

4. Ein mindestens zwei Fahrzeugteile (1, 2) umfassendes Fahrzeug nach einem der voranstehenden Ansprüche,
**dadurch gekennzeichnet,**
**dass** im Bereich der Verbindung zweier Gelenkstangen (11, 12, 13, 14) das Gelenk (10) mit dem jeweiligen Fahrzeugteil (1, 2) verbindbar ist.

5. Ein mindestens zwei Fahrzeugteile (1, 2) umfassendes Fahrzeug nach einem der voranstehenden Ansprüche,
**dadurch gekennzeichnet,**
**dass** mindestens zwischen zwei unmittelbar verbundenen Gelenkstangen (11, 12, 13, 14) mindestens eine ansteuerbare Kolbenzylindereinheit (20) vorgesehen ist.

6. Ein mindestens zwei Fahrzeugteile (1, 2) umfassendes Fahrzeug nach einem der voranstehenden Ansprüche,
**dadurch gekennzeichnet,**
**dass** zumindest zwei, vorzugsweise jedoch jede Gelenkstange durch eine ansteuerbare Kolbenzylindereinheit (30) mit dem jeweils unmittelbar benachbarten Fahrzeug (1, 2) verbunden ist.

7. Ein mindestens zwei Fahrzeugteile (1, 2) umfassendes Fahrzeug nach einem der voranstehenden Ansprüche,
**dadurch gekennzeichnet,**
**dass** zwischen dem Gelenk (10) und dem jeweiligen Fahrzeugteil (1, 2) ein Wank-, Nick- und/oder Knicklager (40) vorgesehen ist.

8. Ein mindestens zwei Fahrzeugteile (1, 2) umfassendes Fahrzeug nach einem der voranstehenden Ansprüche,
**dadurch gekennzeichnet,**
**dass** das hintere gezogene Fahrzeugteil (Anhänger) mindestens zwei Achsen umfasst, wobei die vordere Achse eine Achsschenkellenkung aufweist.
